Europäisches Patentamt

European Patent Office

Office européen des brevets

(11) Veröffentlichungsnummer: **0 399 084 B1**

## (12) EUROPÄISCHE PATENTSCHRIFT

(45) Veröffentlichungstag der Patentschrift: **16.12.92**

(51) Int. Cl.⁵: **H02K 49/04**

(21) Anmeldenummer: **89109549.9**

(22) Anmeldetag: **26.05.89**

(54) **Rotorscheibe für eine Wirbelstrombremse.**

(43) Veröffentlichungstag der Anmeldung:
**28.11.90 Patentblatt  90/48**

(45) Bekanntmachung des Hinweises auf die
Patenterteilung:
**16.12.92 Patentblatt  92/51**

(84) Benannte Vertragsstaaten:
**AT BE CH DE ES FR GB GR IT LI LU NL SE**

(56) Entgegenhaltungen:
**DE-B- 1 179 629**
**DE-C- 833 981**
**FR-A- 1 026 998**
**GB-A- 1 481 575**

(73) Patentinhaber: **Berger, Johann**
**Innsbrucker Strasse 43**
**A-6300 Wörgl(AT)**

(72) Erfinder: **Seiwald, Andreas**
**Anichstrasse 5**
**A-6300 Wörgl(AT)**

(74) Vertreter: **Torggler, Paul, Dr. et al**
**Wilhelm-Greil-Strasse 16**
**A-6020 Innsbruck(AT)**

## Beschreibung

Die Erfindung betrifft eine Rotorscheibe für eine Wirbelstrombremse, insbesondere zum Einbau in die Antriebswelle eines Kraftfahrzeuges, mit einem auf einer Bremswelle befestigbaren, insbesondere als Lüfterrad ausgebildeten Tragteil aus einer Leichtmetallgußlegierung und mit einem Ring aus einem magnetisch weichen Werkstoff, an den der Tragteil angegossen ist und der einem Kranz von Magnetspulen der Wirbelstrombremse zuordenbar ist.

Eine derartige Wirbelstrombremse ist beispielsweise der FR-A-1 026 998 zu entnehmen. Insbesondere für Schwerfahrzeuge stellt eine Wirbelstrombremse eine wirkungsvolle, unabhängige Ergänzung des übrigen Bremssystems dar, und wird, angebaut an das Schaltgetriebe oder als Teil der Kardanwelle, in den Antrieb eingesetzt. Werden die Magnetspulen erregt, so bauen sie Magnetfelder auf, die in dem sich drehenden Rotor Wirbelströme induzieren. Die wiederum von den Wirbelströmen aufgebauten Magnetfelder wirken mit denen der Magnetspulen zusammen, und bremsen den Rotor und damit die Antriebswelle. Der aus zwei verschiedenen Materialien bestehende Rotor weist im spulennahen Ring eine gute elektrische Leitfähigkeit, hohe Permeabilität und geringe magnetische Remanenz auf und ist mit dem Tragteil aus einem gut wärmeleitenden, maßgenau verarbeitbaren und preisgünstigen Material verbunden. Nach der FR-PS 20 44 114 werden die Teile mittels eines Kranzes von Schraubbolzen verbunden. Aufgrund der thermischen Beanspruchungen stellt jedoch die auf mehrere Punkte beschränkte Verbindung keine befriedigende Lösung dar.

Nach der EP-PS 260 253 wird die Verbindung der beiden Teile jeder Rotorscheibe dadurch erreicht, daß im Ring aus magnetisch weichem Werkstoff eine Ringnut und am Tragteil ein Ringsteg vorgesehen sind, wobei die achsparallelen Seitenwände mit Gewinden versehen sind, die die direkte Verschraubung der beiden Teile der Rotorscheibe ermöglichen. Dies führt zu einer praktisch vollflächigen Verbindung der beiden Teile, die auch starken thermischen Beanspruchungen standhält. Es hat sich allerdings gezeigt, daß es, da die Rotorscheibe in beide Drehrichtungen (Vor- und Rückwärtsfahrt)wirksam ist, zum selbsttätigen Lösen der Verschraubung kommen kann.

Die Erfindung hat es sich somit zur Aufgabe gestellt, eine Rotorscheibe für eine Wirbelstrombremse zu schaffen, die eine unlösbare, flächige Verbindung zwischen ihren beiden Teilen aufweist.

Erfindungsgemäß wird dies durch Hinzunahme der kennzeichnenden Merkmale des Anspruchs 1 erreicht.

Durch das Vergießen der beiden Teile wird eine äußerst kompakte, unlösbare Verbindung erreicht, die auch große thermische Belastungen aufgrund unterschiedlicher Wärmeausdehnungskoeffizienten der beiden Werkstoffe aufnimmt. Die Herstellung der Rotorscheibe erfolgt dabei in der Weise, daß der Ring aus magnetisch weichem Material in eine Gießform gelegt wird und anschließend die Leichtmetallegierung zur Herstellung des Tragteiles eingegossen wird. Bevorzugt umschließt der Tragteil den Ring an drei Seiten, sodaß nur die zu den Magnetspulen weisende Seite des Ringes freiliegt. Zur Verbesserung der Verbindung zwischen dem Ring und dem angegossenen Tragteil ist an der den Magnetspulen abgewandten Seite des Ringes zumindest ein Halteblech angeschweißt, das eine dreidimensionale Struktur aufweist und in den Tragteil eingegossen ist. Unter dreidimensionaler Struktur wird dabei verstanden, daß das Halteblech hochstehende, beispielsweise hochgebogene, oder gekröpfte Bereiche aufweist, die sich im Tragteil verankern. Ein derartiges Halteblech kann insbesondere am Ring anliegende Stege, die mit dem Ring verschweißt sind, und von diesen hochgebogene Bereiche aufweisen, in denen Durchbrechungen ausgebildet sind,sodaß vom Ring beabstandete Stege verbleiben. Die Leichtmetallegierung unterfließt bei der Herstellung die höher gelegenen Stege, die somit vollständig eingebettet sind. Vorzugsweise entspricht die Zahl der Haltebleche der Anzahl der Magnetspulen, sodaß jedes Halteblech einen Ringabschnitt überdeckt.

Der Ring kann, wie aus dem Stand der Technik bekannt, einstückig, insbesondere gegossen ausgebildet sein. In diesem Fall sind für das dreiseitige Umgießen an den beiden Umfangsseiten bevorzugt Ringnuten ausgebildet, in die die Leichtmetallegierung einfließt, sodaß die Verankerung nochmals verbessert ist.

Es besteht aber auch die Möglichkeit, den Ring aus Dynamoblech zu erzeugen, indem ein Blechband in der Breite der Ringdicke gewickelt wird, bis die annähernd dem Magnetspulendurchmesser entsprechende Ringbreite gegeben ist. Insbesondere nach Befestigung der Haltebleche und dem dreiseitigen Umgießen des Blechwickels liegt eine ausgezeichnete Verbindung und Verankerung im Tragteil vor, wobei die Herstellungskosten des Ringes wesentlich geringer sind. Das Wickeln des Ringes bietet auch die einfachste und vorteilhafteste Möglichkeit der Herstellung von Ringen mit beliebigen Durchmessern und Ringbreiten zur exakten Anpassung an verschiedene Magnetspulenträger.

Nachstehend wird nun die Erfindung an Hand der Figuren der beiliegenden Zeichnungen näher beschrieben, ohne darauf beschränkt zu sein.

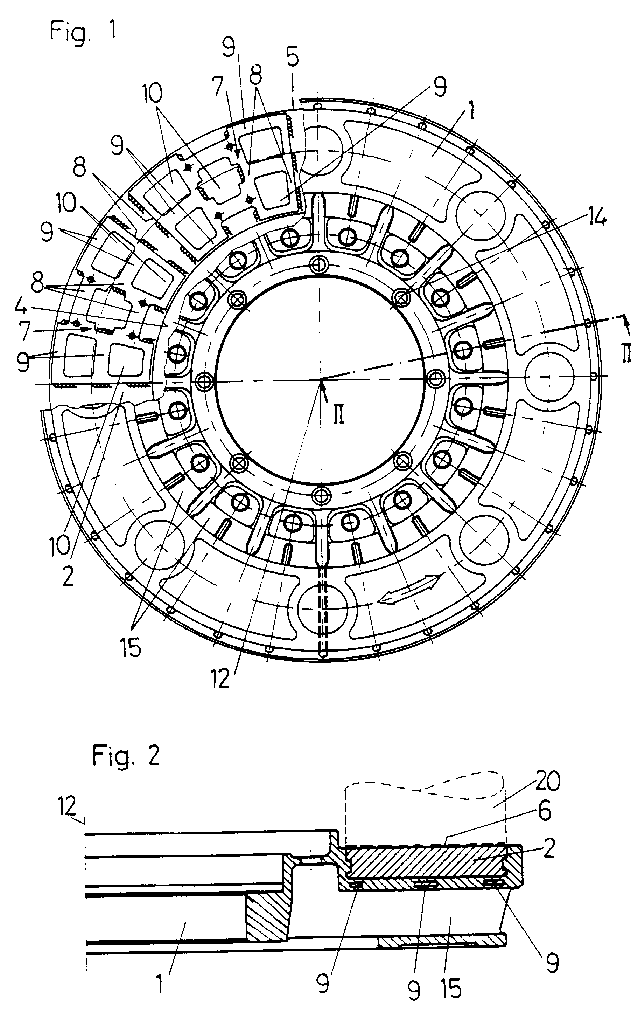

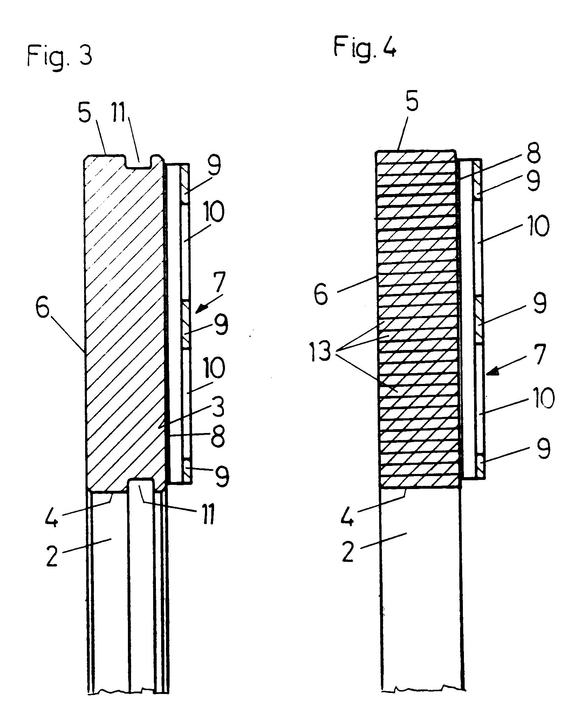

Die Fig. 1 zeigt eine Draufsicht auf eine Rotorscheibe, wobei der Tragteil teilweise weggelassen ist, Fig. 2 einen Schnitt nach der Linie II-II in Fig. 1, Fig. 3 einen gleichartigen Schnitt durch den Ring der Rotorscheibe und Fig. 4 einen gewickelten Ring im Schnitt gemäß Fig. 3.

Eine Rotorscheibe für eine Wirbelstrombremse wird auf einer nicht gezeigten Bremswelle mit der Achse 12 mit Hilfe einer Nabe befestigt. Die Verbindung mit der Nabe erfolgt über Schrauben, die durch Bohrungen 14 eines Tragteiles 1 der Rotorscheibe eingesetzt werden. Der Tragteil 1 besteht aus einer Leichtmetallgußlegierung und ist als Lüfterrad mit Hohlräumen 15 ausgebildet. Der Tragteil 1 weist an der zum Kranz von Magnetspulen 20 weisenden Seite einen Ring 2 aus magnetisch weichem Werkstoff auf. Der Ring 2, der gemäß den Fig. 1 bis 3 aus einem Stück besteht und vorzugsweise ebenfalls gegossen ist, weist eine zu den Magnetspulen 20 weisende freie Ringfläche 6 auf und ist an den übrigen drei Seiten 3,4,5 vom Tragteil 1 umschlossen. An den beiden Umfangsseiten 4,5 sind Ringnuten 11 ausgebildet, und an der der freien Ringfläche 6 gegenüberliegenden Seite 3 sind Haltebleche 7 angeschweißt, die jeweils einen einer Magnetspule 20 entsprechenden Ringabschnitt überdecken. Die Haltebleche 7 weisen am Ring 2 bzw. an dessen Seite 3 angeschweißte Bereiche oder Stege 8 auf, an die hochgekantete gekröpfte Bereiche anschließen. Diese sind durch Stege 9 verbunden, die vom Ring 2 bzw. dessen Seite 3 einen Abstand aufweisen und Öffnungen oder Durchbrechungen 10 begrenzen. Die beabstandeten Stege 9 sind in den Tragteil 1 eingebettet (Fig. 2).

In der Ausführung nach Fig. 4 besteht der Ring 2 aus einem Wickel 13 eines Dynamobleches, das heißt ein Blechstreifen mit einer der Dicke des Ringes 2 entsprechenden Breite wird zum Ring 2 gewickelt. An diesen werden wiederum Haltebleche 7 angeschweißt.

Für die Fertigung der Rotorscheibe wird der mit Halteblechen 7 bestückte einstückig gegossene Ring 2 nach Fig. 1 bis 3 oder der mit Halteblechen 7 bestückte Wickel 13 nach Fig. 4 in eine Gießform für den Tragteil 1 eingelegt, und diese mit der Leichtmetallegierung ausgegossen. Diese fließt durch die Durchbrechungen 10 der Haltebleche 7 und unter die beabstandeten Stege 9, sowie in die in der Ausführung nach Fig. 1 bis 3 vorgesehenen Ringnuten 11, sodaß eine innige, auch extremen thermischen Belastungen widerstehende Verbindung zwischen dem Ring 2 und dem ihm dreiseitig erfassenden Tragteil 1 entsteht.

## Patentansprüche

1. Rotorscheibe für eine Wirbelstrombremse, insbesondere zum Einbau in die Antriebswelle eines Kraftfahrzeuges, mit einem auf einer Bremswelle befestigbaren, insbesondere als Lüfterrad ausgebildeten Tragteil (1) aus einer Lichtmetallgußlegierung und mit einem Ring (2) aus einem magnetisch weichen Werkstoff, an den der Tragteil (1) angegossen ist und der einem Kranz von Magnetspulen (20) der Wirbelstrombremse zuordenbar ist, dadurch gekennzeichnet, daß an der den Magnetspulen (20) abgewandten Seite (3) des Ringes (2) zumindest ein Halteblech (7) angeschweißt ist, das eine dreidimensionale Struktur aufweist, von der ein Teil (9) vollständig in den Tragteil (1) eingegossen ist.

2. Rotorscheibe nach Anspruch 1, dadurch gekennzeichnet, daß der Ring (2) an drei Seiten (3,4,5) vom Tragteil (1) umgossen ist.

3. Rotorscheibe nach Anspruch 1, dadurch gekennzeichnet, daß die dreidimensionale Struktur der Haltebleche (7) am Ring (2) anliegende Stege (8) und vom Ring (2) beabstandete Stege (9) umfaßt, die Durchbrechungen (10) aufweisen.

4. Rotorscheibe nach einem der Ansprüche 1 bis 3, dadurch gekennzeichnet, daß die beiden Umfangsseiten (4,5) mit Ringnuten (11) versehen sind, in die der Tragteil (1) eingegossen ist.

5. Rotorscheibe nach einem der Ansprüche 1 bis 3, dadurch gekennzeichnet, daß der Ring (2) aus einem Wickel (13) eines Dynamobleches besteht.

## Claims

1. A rotor disc for an eddy current brake, in particular for installation in the drive line of a motor vehicle, comprising a carrier member (1) of a light metal casting alloy, which can be fixed on a brake shaft and which is in particular in the form of a fan wheel, and a ring (2) of a magnetically soft material on to which the carrier member (1) is cast and which can be associated with a ring of magnetic coils (20) of the eddy current brake, characterised in that welded to the side (3) of the ring (2) which is remote from the magnetic coils (20) is at least one holding plate (7) which is of a three-dimensional structure of which a part (9) is completely cast into the carrier member (1).

2. A rotor disc according to claim 1 characterised in that the ring (2) has the carrier member (1) cast therearound at three sides (3, 4, 5).

3. A rotor disc according to claim 1 characterised in that the three-dimensional structure of the holding plate (7) includes limbs (8) bearing against the ring (2) and limbs (9) spaced from the ring (2), which have through openings (10).

4. A rotor disc according to one of claims 1 to 3 characterised in that the two peripheral sides (4, 5) are provided with annular grooves (11) into which the carrier member (1) is cast.

5. A rotor disc according to one of claims 1 to 3 characterised in that the ring (2) comprises a winding (13) of dynamo laminations.

**Revendications**

1. Disque rotorique pour un ralentisseur à courants de Foucault, spécialement en vue de l'intégration sur l'arbre moteur d'un véhicule poids lourd, avec une partie support'(1) faite en particulier comme une roue de ventilateur, à fixer sur un arbre de freinage, coulée en alliage léger, et avec un anneau (2) fait d'un matériau magnétique doux, sur lequel la partie support (1) est coulée et qui se coordonne avec une couronne de bobinages magnétiques (20) du ralentisseur à courants de Foucault, caractérisé en ce que sur le côté (3) de l'anneau (2) opposé aux bobinages magnétiques (20) est soudée au moins une tôle de maintien (7), qui présente une structure tri-dimensionnelle, dont une partie (9) est entièrement noyée dans la partie support (1).

2. Disque rotorique selon la revendication 1, caractérisé en ce que l'anneau (2) est inséré par coulée sur les trois côtés (3, 4, 5) de la partie support (1).

3. Disque rotorique selon la revendication 1, caractérisé en ce que la structure tri-dimensionnelle des tôles de maintien (7) comprend des parties (8) appliquées sur l'anneau (2) et des parties (9) écartées de l'anneau (2), qui présentent des discontinuités (10).

4. Disque rotorique selon l'une des revendications 1 à 3, caractérisé en ce que les deux côtés extérieurs (4, 5) sont munis de gorges circulaires (11) dans lesquelles est coulée la partie support (1).

5. Disque rotorique selon l'une des revendications 1 a 3, caractérisé en ce que l'anneau (2) consiste en un enroulement (13) de tôle dynamo.

Fig. 1

Fig. 2

Fig. 3

Fig. 4